# EUROPEAN PATENT SPECIFICATION

(11) **EP 3 455 318 B1**
(45) Date of publication and mention of the grant of the patent: **19.02.2020**
(21) Application number: 17722422.7
(22) Date of filing: 08.05.2017
(51) Int. Cl.: C09J 169/00, C08L 69/00

(54) **ADHESIVE FORMULATIONS WITH IMPROVED THERMAL AND BONDING PROPERTIES**
KLEBSTOFFFORMULIERUNGEN MIT VERBESSERTEN THERMISCHEN EIGENSCHAFTEN UND HAFTEIGENSCHAFTEN
FORMULATIONS ADHÉSIVES ET THERMIQUES AVEC DES PROPRIÉTÉS DE LIAISON AMÉLIORÉES

(30) Priority: 09.05.2016 EP 16382204
(43) Date of publication of application: 20.03.2019
(73) Proprietor: Repsol, S.A., 28045 Madrid (ES)
(72) Inventor: SEGURA FERNÁNDEZ, Sonia, E-28935 Móstoles - Madrid (ES); MARÍN PERALES, Laura, E-28935 Móstoles - Madrid (ES); RUIZ ORTA, Carolina, E-28935 Móstoles - Madrid (ES); GARCÍA RUIZ, Mónica, E-28935 Móstoles - Madrid (ES); ARANDILLA COLIAS, Borja, E-28935 Móstoles - Madrid (ES); MARTÍN MARTÍNEZ, José Miguel, E-03690 San Vicente del Raspeig - Alicante (ES); YÁÑEZ PACIOS, Andrés Jesús, E-03690 San Vicente del Raspeig - Alicante (ES)
(74) Representative: ABG Intellectual Property Law, S.L.
(86) International application number: PCT/EP2017/060879
(87) International publication number: WO 2017/194445

(56) References cited:
- WO-A1-2013/024980
- WO-A1-2014/042603

## Description

### FIELD OF THE INVENTION

The present invention refers to compositions suitable for the preparation of adhesive formulations, particularly hot melt adhesives with improved thermal stability and enhanced adhesive properties, as well as with a controlled open-time assembly depending on the application requirements, and, in particular, it relates to a composition comprising a mixture of poly(alkylene carbonates) with different glass transition temperature.

### BACKGROUND

Hot melt adhesives are a particular class of adhesives based on thermoplastic compositions which are solid at room temperature and form bond with virtually all substrates when pressure is applied. They are widely used for either permanent or removable applications. Hot melt adhesives have acquired increasing significance in numerous areas of bonding technology. The advantages of hot melts lay in the fact that they develop the necessary bond strength by cooling from the melt and, accordingly, are suitable for high-speed production processes.

A key requirement for hot melt adhesives is their behavior during melting, application and adhesion after solidification. Hot melt adhesives require the application of heat to be used, so if the temperature is increased, the stability of the polymer can be reduced during the application and, consequently, the strength of the bond formed is reduced. Therefore, the bonding properties of the adhesive must not be altered at the temperature of application of the adhesive and, accordingly, it is important to find adhesive formulations with improved thermal stability in order to avoid its degradation during application. Thus, hot melt adhesives with thermal stability, heat resistance and adhesion in a wide range of temperatures are particularly required.

In this sense, poly(alkylene carbonates) or mixtures thereof are known in the prior art having enhanced thermal stability. For example, in WO2014/042603 the thermal stability of poly(alkylene carbonates) is improved by incorporating an end-capping agent in the polymer chain , as well as by adding of one or more antioxidants.

WO2013/034539 discloses polyol polycarbonate mixtures having decomposition temperatures higher than 180°C which comprise in their structure at least two different repetitive units selected from -R₁-O-C(=O)-O-, -R₂-O-C(=O)-O- and -R₃-O-C(=O)-O-, wherein R₁, R₂ and R₃ are respectively a C₄-, C₅- and C₆-alkyl chain.

WO2012/091343 describes a process to improve the thermal stability of a poly(propylene carbonate) by the introduction of an urethane group at the end of the polymer chain from the reaction of an isocyanate with a polyol.

US 4,851,507 refers to a thermoplastic poly(alkylene carbonate) prepared by copolymerization of CO₂ and a mixture of epoxides, namely propylene oxide and a linear or branched alkylene oxide having at least four carbon atoms. The incorporation of this second epoxide allows improving the decomposition temperature of the resulting polymer.

WO2011/005664 describes a poly(propylene carbonate) having a precise and particular structure derived from the reaction parameters used during the synthesis thereof. Particularly, it has a percentage of carbonate linkages of at least 90%. Said document also describes a mixture of two or more poly(propylene carbonates) having different molecular weights.

WO2010/028362 and WO2012/071505 disclose the preparation of poly(propylene carbonates) having percentages of carbonate linkages higher than 90% and number average molecular weights lower than 20,000.

Another important property of hot melt adhesives is their open time or open assembly time. Open time generally refers to the amount of time, after the hot melt adhesive is applied onto a first substrate, that the adhesive is still capable of creating an effective bond to a second substrate. The amount of open time a particular hot melt demonstrates depends generally on its application temperature, rate of cooling, rate of crystallization and the amount of crystallization that will ultimately occur.

The amount of open time desired varies from one application to another. Packaging applications generally require fast setting adhesives having open times of typically 5 to 15 seconds. Assembly of large parts, such as paneling or furniture, generally requires longer open times in order to have enough time to apply the adhesive on large areas, followed by positioning and assembly of the parts. During this assembly, the adhesive layer must remain pliable and tacky to ensure a durable bond.

There are many examples of long open-time adhesives based on polyamide compositions (see for example EP0334667, US5,672,677, EP0965627). Other examples of long open-time adhesives include two-component polyurethane compositions (WO02/062864). WO 2014/042603 A1 relates to an enhanced thermal stability polyalkylene carbonate composition. The composition comprises one or more polyalkylene carbonates.

In spite of all of them, there is a need for hot melt adhesives having an improved heat resistance and good adhesion properties, but also combined with a controlled open assembly time depending on the final application. Actually, the degradation temperature, as well as the adhesion properties, are key factors in the development of other adhesive formulations, such as pressure sensitive adhesives, and not only hot melt adhesives.

However, in the literature there are not documents describing mixtures of poly(alkylene carbonates) having other different structural properties for their application as adhesives, and particularly, as hot melt adhesives with an improved thermal stability and increased adhesive properties combined with a controlled open assembly time .

### BRIEF DESCRIPTION OF THE INVENTION

The authors of the present invention have found that a mixture of poly(alkylene carbonates) having different glass transition temperature (Tg) provides better adhesion properties and an improved thermal stability when compared to the isolated components of said mixture. These properties make the mixture very useful for the manufacture of adhesive formulations, and particularly, of hot melt adhesives with controlled open-time assembly.

As derivable from the experimental part, the mixture improves synergistically the thermal stability of each component since they have a degradation temperature significantly lower. Furthermore, said mixture also provides an adhesive formulation with significantly improved adhesion properties, particularly an improved shear adhesion and peeling from canvas, when compared to the isolated components.

Thus, a first aspect of the present invention relates to a composition comprising:
a) 5-95 wt% of a poly(alkylene carbonate), wherein said poly(alkylene carbonate) has a glass transition temperature equal to or lower than 30°C and a number average molecular weight higher than 15,000 Da; and
b) 95-5 wt% of a poly(alkylene carbonate), wherein said poly(alkylene carbonate) has a glass transition temperature higher than 30°C.
wherein:
- the values of the glass transition temperature and the number average molecular weight are measured following the methods specified herein below.

In a preferred embodiment, the poly(alkylene carbonate), referred to as component a), is selected from poly(propylene carbonate), poly(ethylene carbonate), poly(propylene and ethylene carbonate) and mixtures thereof.

In another preferred embodiment, the poly(alkylene carbonate), referred to as component b), is selected from poly(propylene carbonate), poly(cyclohexene carbonate), poly(limonene carbonate), poly(propylene and cyclohexene carbonate), poly(propylene and limonene carbonate) and mixtures thereof.

A second aspect of the present invention relates to a process for the preparation of a composition as defined above, said process comprises the mixture of the poly(alkylene carbonate) having a glass transition temperature higher than 30°C and the poly(alkylene carbonate) having a glass transition temperature equal to or lower than 30°C and a number average molecular weight higher than 15,000 Da until a homogeneous mixture is obtained.

Another aspect of the present invention refers to an adhesive formulation comprising the above referred composition. In a preferred embodiment, the adhesive formulation is a hot melt adhesive or a pressure sensitive adhesive, more preferably is a hot melt adhesive with a controlled open-time assembly.

Another aspect of the present invention refers to the use of the adhesive formulation to bond substrates.

### DETAILED DESCRIPTION OF THE INVENTION

In the context of the present invention, the values of glass transition temperature (Tg) refer to those taken from the second heating in differential scanning calorimeter (DSC) experiments according to the following procedure. Non-isothermal (10°C/min from -85 to 200°C) experiments are carried out using a DSC TA Instruments Q2000 under nitrogen flow, operating with an intra-cooler under nitrogen flow. Temperature and heat flow calibrations are performed with indium as standard.

The values of the number-average molecular weight (Mn) of the polyalkylene carbonates refer to those determined against polystyrene standards by gel-permeation chromatography (GPC) using a Bruker 3800 equipped with a deflection RI detector. Tetrahydrofuran at 1 mL/min flow rate is used as eluent at room temperature.

As mentioned before, the first aspect of the present invention relates to a composition comprising:
a) 5-95 wt% of a poly(alkylene carbonate), wherein said poly(alkylene carbonate) has a glass transition temperature equal to or lower than 30°C and a number average molecular weight higher than 15,000 Da; and
b) 95-5 wt% of a poly(alkylene carbonate), wherein said poly(alkylene carbonate) has a glass transition temperature higher than 30°C.

### Component a)

The component a) of the composition of the invention is a poly(alkylene carbonate) having a glass transition temperature equal to or lower than 30°C and a number average molecular weight higher than 15,000 Da.

The term poly(alkylene carbonates) (PAC) includes those polymers having ether and carbonate units (Encyclopedia of Polymer Science and Technology, Johnson Wiley and sons, Vol. 3). The polyalkylene carbonates used as component a) in the composition of the invention are prepared by copolymerization of one or more epoxides with CO₂. PACs are known in the art, and the skilled person can select from a wide range attending, for example, to their structure, molecular or physical properties.

According to an embodiment of the invention, the PAC derives (either by being actually used or notionally) from one or more epoxides selected from the group consisting of (C₂-C₂₀)alkyleneoxide, (C₁-C₂₀)alkyloxy, (C₆-C₂₀)aryloxy, (C₆-C₂₀)arylalkyloxy, (C₄-C₂₀)cycloalkyloxide, (C₅-C₂₀)cycloalkyleneoxide and mixtures thereof. Exemplary, non-limitative epoxide compounds may be one or more selected from the group consisting of ethylene oxide, propylene oxide, butene oxide, pentene oxide, hexene oxide, octene oxide, decene oxide, dodecene oxide, tetradecene oxide, hexadecene oxide, octadecene oxide, butadiene monoxide, 1,2-epoxide-7-octene, epifluorohydrin, epichlorohydrine, epibromohydrin, glycidyl methyl ether, glycidyl ethyl ether, glycidyl normal propyl ether, glycidyl sec-butyl ether, glycidyl normal or isopentyl ether, glycidyl normal hexyl ether, glycidyl normal heptyl ether, glycidyl normal octyl or 2-ethyl-hexyl ether, glycidyl normal or isononyl ether, glycidyl normal decyl ether, glycidyl normal dodecyl ether, glycidyl normal tetradecyl ether, glycidyl normal hexadecyl ether, glycidyl normal octadecyl ether, glycidyl normal icocyl ether, isopropyl glycidyl ether, butyl glycidyl ether, t-butyl glycidyl ether, 2-ethylhexyl glycidyl ether, allyl glycidyl ether, cyclopentene oxide, cyclohexene oxide, cyclooctene oxide, cyclododecene oxide, alpha-pinene oxide, 2,3-epoxide norbonene, limonene oxide, dieldrin, 2,3-epoxide propyl benzene, styrene oxide, phenyl propylene oxide, stilbene oxide, chlorostilbene oxide, dichlorostilbene oxide, 1,2-epoxy-3-phenoxypropane, benzyl oxymethyl oxirane, glycidyl-methylphenyl ether, chlorophenyl-2,3-epoxide propyl ether, epoxypropyl methoxyphenyl ether, biphenyl glycidyl ether, glycidyl naphthyl ether, glycidyl acetic acid ester, glycidyl propionate, glycidyl butanoate, glycidyl normal pentanoate, glycidyl normal hexanoate, glycidyl heptanoate, glycidyl normal octanoate, glycidyl 2-ehtyl hexanoate, glycidyl normal nonanoate, glycidyl normal decanoate, glycidyl normal dodecanoate, glycidyl normal tetradecanoate, glycidyl normal hexadecanoate, glycidyl normal octadecanoate, and glycidyl icosanoate.

According to an embodiment of the invention, the PAC can be based on a C₂-C₆ oxirane, for example a C₂, a C₃ or a C₄, such as poly(ethylene carbonate) (PEC), poly(propylene carbonate) (PPC - see for example, Luinstra G. A.; Borchardt E., Adv. Polym. Sci. (2012) 245: 29-48 and Luinstra,G. A., Polymer Reviews (2008) 48:192-219), poly(butylene carbonate), or poly(hexylene carbonate). Examples of cyclic aliphatic carbonate may include poly(cyclohexene carbonate), poly(norbornene carbonate) or poly(limonene carbonate).

The poly(alkylene carbonate) can include mixtures of different poly(alkylene carbonates). Such mixtures can be, for example, mixtures of poly(propylene carbonate) and poly(ethylene carbonate), or poly(propylene carbonate) or poly(ethylene carbonate)with other poly(alkylene carbonate), such as poly(butylene carbonate), poly(hexylene carbonate), poly(cyclohexene carbonate), poly(norbornene carbonate) or poly(limonene carbonate). The poly(alkylene carbonate) also includes those resulting from the copolymerization of CO₂ with two or more epoxides, and more particularly ethylene oxide and propylene oxide. In the present invention "alkylene oxide", "epoxide" or "oxirane" are all considered equivalent.

The number average molecular weight of the PAC should be higher than 15,000 Da. In a preferred embodiment, the number average molecular weight is higher than 18,000 Da, more preferably between 20,000 and 300,000 Da.

The polyalkylene carbonate should have a Tg equal to or lower than 30°C, preferably between 10 and 29°C, more preferably from 15 to 29°C, even more preferably from 15 to 28°C and most preferably from 15 to 27°C. This feature is essential for the PAC included in the composition of the invention, referred to as component a), in order to impair the desired thermal and adhesive properties thereto.

In a preferred embodiment, the poly(alkylene carbonate), referred to as component a) is selected from poly(propylene carbonate), poly(ethylene carbonate), poly(propylene and ethylene carbonate) and mixtures thereof.

In a particular embodiment, the poly(alkylene carbonate), referred to as component a), is poly(propylene carbonate).

The poly(propylene carbonate), also referred to as PPC, is the resulting product of copolymerizing CO₂ with propylene oxide in the presence of a catalyst. Said reaction provides a compound containing a primary repeating unit having the following structure:

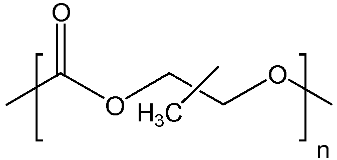

In a particular embodiment, the poly(propylene carbonate) is obtained by copolymerization of CO₂ and propylene oxide in the presence of transition metal catalysts, such as metal Salen catalysts, for example cobalt Salen catalysts or zinc glutarate catalysts. Suitable catalysts and methods include those mentioned, for example, in WO2010/022388, WO2010/028362, WO2012/071505, US 8,507,708, US 4,789,727, Angew. Chem. Int., 2003, 42, 5484-5487; Angew. Chem. Int., 2004, 43, 6618-6639; and Macromolecules, 2010, 43, 7398-7401.

In another particular embodiment, the poly(propylene carbonate) is characterized for having a high percentage of carbonate linkages. Preferably, the poly(propylene carbonate) has on average more than about 75% of adjacent monomer units connected via carbonate linkages and less than about 25% of ether linkages.

In another particular embodiment, the poly(propylene carbonate), referred to as component a), is comprised in the composition of the invention in a weight proportion between 5% and 95%, more preferably from 10 to 90 wt% with respect to the total weight of the composition.

Thus, in a particular embodiment, the composition of the invention comprises:
a) 5-95 wt% of poly(propylene carbonate), wherein said poly(propylene carbonate) has a glass transition temperature equal to or lower than 30°C and a number average molecular weight higher than 15,000 Da; and
b) 95-5 wt% of a poly(alkylene carbonate), wherein said poly (alkylene carbonate) has a glass transition temperature higher than 30°C.

In another particular embodiment, the composition of the invention comprises:
a) 10-90 wt% of poly(propylene carbonate), wherein said poly(propylene carbonate) has a glass transition temperature equal to or lower than 30°C and a number average molecular weight higher than 15,000 Da; and
b) 90-10 wt% of a poly(alkylene carbonate), wherein said poly(alkylene carbonate) has a glass transition temperature higher than 30°C.

The poly(propylene carbonate), referred to as component a), should have a number average molecular weight higher than 15,000 Da. In a preferred embodiment, the number average molecular weight of the poly(propylene carbonate), referred to as component a) of the composition of the invention, is higher than 18,000 Da, more preferably from 20,000 to 300,000 Da, even more preferably between 35,000 and 200,000 Da.

Said poly(propylene carbonate) should have a Tg equal to or_lower than 30°C, preferably between 10 and 29°C, more preferably from 15 to 29°C, even more preferably from 15 to 28°C, and most preferably from 15 to 27°C.

In another particular embodiment, the poly(alkylene carbonate), referred to as component a), is poly(ethylene carbonate).

The poly(ethylene carbonate), also referred to as PEC, is the resulting product of copolymerizing CO₂ with ethylene oxide in the presence of a catalyst. Said reaction provides a compound containing a primary repeating unit having the following structure:

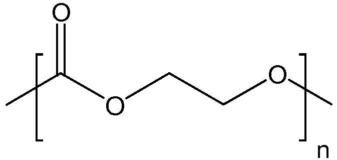

In another particular embodiment, the poly(ethylene carbonate) is characterized for having a high percentage of carbonate linkages. Preferably, the poly(ethylene carbonate) has on average more than about 75% of adjacent monomer units connected via carbonate linkages and less than about 25% of ether linkages. More preferably, the poly(ethylene carbonate) has on average more than about 80% of adjacent monomer units connected via carbonate linkages, even more preferably more than 85%, and most preferably more than 90%.

In another particular embodiment, the poly(ethylene carbonate) is comprised in the composition of the invention in a weight proportion between 5% and 50%, more preferably from 5 to 25 wt% with respect to the total weight of the composition.

Thus, in a particular embodiment, the composition of the invention comprises:
a) 5-50 wt% of poly(ethylene carbonate), wherein said poly(ethylene carbonate) has a glass transition temperature equal to or lower than 30°C and a number average molecular weight higher than 15,000 Da; and
b) 95-50 wt% of a poly(alkylene carbonate), wherein said poly(alkylene carbonate) has a glass transition temperature higher than 30°C.

In another particular embodiment, the composition of the invention comprises:
a) 5-25 wt% of poly(ethylene carbonate), wherein said poly(ethylene carbonate) has a glass transition temperature equal to or lower than 30°C and a number average molecular weight higher than 15,000 Da; and
b) 95-75 wt% of a poly(alkylene carbonate), wherein said poly(alkylene carbonate) has a glass transition temperature higher than 30°C.

The poly(ethylene carbonate) should have a number average molecular weight higher than 15,000 Da. In a preferred embodiment, it has a number average molecular weight ranging from 50,000 to 300,000 Da, more preferably from 50,000 to 150,000 Da, even more preferably from 50,000 to 100,000 Da.

Said poly(ethylene carbonate) should have a Tg equal to or_lower than 30°C, more preferably between 10 and 29°C, even more preferably from 15 to 25°C.

### Component b)

The component b) of the composition of the invention is also a poly(alkylene carbonate) however, contrary to the poly(alkylene carbonate) as component a), it has a Tg higher than 30°C.

Said poly(alkylene carbonate) also refers to the polymers as those described above for the poly(alkylene carbonate) as component a) and it can also be prepared according to the procedures mentioned above.

However, as component b) of the composition of the invention, said poly(alkylene carbonate) is characterized for having a glass transition temperature higher than 30°C. This feature is also essential to impair the desired thermal and adhesive properties to the composition of the invention.

The poly(alkylene carbonate), referred to as component b), can also include mixtures of different poly(alkylene carbonates). Such mixtures can be, for example, mixtures of poly(propylene carbonate) with other poly(alkylene carbonates), such as poly(butylene carbonate), poly(hexylene carbonate), poly(cyclohexene carbonate), poly(norbornene carbonate) or poly(limonene carbonate). The poly(alkylene carbonates) also includes those resulting from the copolymerization of CO₂ with two or more epoxides, more particularly selected from propylene oxide, cyclohexene oxide and limonene oxide.

However, in a preferred embodiment, the poly(alkylene carbonate), referred to as component b), is selected from poly(propylene carbonate), poly(cyclohexene carbonate), poly(limonene carbonate), poly(propylene and cyclohexene carbonate); poly(propylene and limonene carbonate) and mixtures thereof.

In a more preferred embodiment, the poly(alkylene carbonate), referred to as component b), is poly(propylene carbonate).

Said poly(propylene carbonate) has the same structure as the one mentioned above for the particular case in which the poly(alkylene carbonate) of component a) is a poly(propylene carbonate) and it can also be prepared according to the procedures mentioned above.

However, as component b) of the composition of the invention, said poly(propylene carbonate) is characterized for having a glass transition temperature higher than 30°C.

In a particular embodiment, the glass transition temperature of the poly(propylene carbonate) as component b) ranges from 31 to 50°C, more preferably from 32 to 47°C, even more preferably from 32 to 45°C, and most preferably from 32 to 40°C.

In a particular embodiment, the poly(propylene carbonate) as component b) has a number average molecular weight from 20,000 to 300,000 Da, even more preferably between 35,000 and 200,000 Da. In a preferred embodiment, the number average molecular weight of the poly(propylene carbonate), referred to as component b) of the composition of the invention, is higher than 70,000 Da, more preferably from 75,000 to 250,000 Da.

In another embodiment, this poly(propylene carbonate) is characterized for also having a high percentage of carbonate linkages. Preferably, the poly(propylene carbonate) has on average more than about 75% of adjacent monomer units connected via carbonate linkages and less than about 25% of ether linkages. More preferably, the poly(propylene carbonate) has on average more than about 80% of adjacent monomer units connected via carbonate linkages, even more preferably more than 85%, and most preferably more than 90%.

The poly(propylene carbonate), referred to as component b), is comprised in the composition of the invention in a weight proportion between 5% and 95%.

However, in a preferred embodiment, it is comprised in the composition of the invention in a weight proportion between 10 to 90 wt% with respect to the total weight of the composition.

In another preferred embodiment, it is comprised in the composition of the invention in a weight proportion from 25 to 95 wt%, more preferably from 50 to 95 wt%, even more preferably from 75 to 95 wt%, with respect to the total weight of the composition.

Thus, in a particular embodiment, the composition of the invention comprises:
a) 5-95 wt% of a poly(alkylene carbonate), wherein said poly(alkylene carbonate) has a glass transition temperature equal to or lower than 30°C and a number average molecular weight higher than 15,000 Da; and
b) 95-5 wt% of poly(propylene carbonate), wherein said poly(propylene carbonate) has a glass transition temperature higher than 30°C.

Most preferably, the composition of the invention comprises:
a) 5-95 wt% of poly(propylene carbonate), wherein said poly(propylene carbonate) has a glass transition temperature equal to or lower than 30°C and a number average molecular weight higher than 15,000 Da; and
b) 95-5 wt% of poly(propylene carbonate), wherein said poly(propylene carbonate) has a glass transition temperature higher than 30°C.

In another preferred embodiment, the composition of the invention comprises:
a) 10-90 wt% of poly(propylene carbonate), wherein said poly(propylene carbonate) has a glass transition temperature equal to or lower than 30°C and a number average molecular weight higher than 15,000 Da; and
b) 90-10 wt% of poly(propylene carbonate), wherein said poly(propylene carbonate) has a glass transition temperature higher than 30°C.

In another preferred embodiment, the composition of the invention comprises:
a) 5-50 wt% of poly(ethylene carbonate), wherein said poly(ethylene carbonate) has a glass transition temperature equal to or lower than 30°C and a number average molecular weight higher than 15,000 Da; and
b) 95-50 wt% of poly(propylene carbonate), wherein said poly(propylene carbonate) has a glass transition temperature higher than 30°C.

In another particular embodiment, the composition of the invention comprises:
a) 5-25 wt% of poly(ethylene carbonate), wherein said poly(ethylene carbonate) has a glass transition temperature equal to or lower than 30°C and a number average molecular weight higher than 15,000 Da; and
b) 95-75 wt% of poly(propylene carbonate), wherein said poly(propylene carbonate) has a glass transition temperature higher than 30°C.

In another particular embodiment, the poly(alkylene carbonate), referred to as component b), is poly(cyclohexene carbonate). This polymer is the resulting product of copolymerizing CO₂ with cyclohexene oxide in the presence of a catalyst.

Said reaction provides a compound containing a primary repeating unit having the following structure:

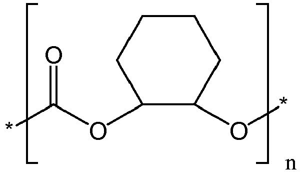

In another particular embodiment, the poly(alkylene carbonate), referred to as component b), is poly(limonene carbonate). This polymer is the resulting product of copolymerizing CO₂ with limonene oxide oxide in the presence of a catalyst.

Said reaction provides a compound containing a primary repeating unit having the following structure:

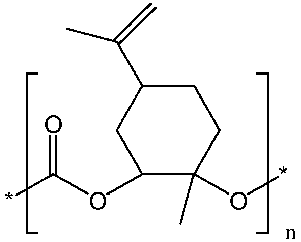

The poly(cyclohexene carbonate) and the poly(limonene carbonate) are characterized for having a Tg higher than 30°C and up to 115-140°C.

For components a) and b) and mixtures thereof, the glass transition temperature (Tg) is measured from Differential Scanning Calorimetry (DSC) taking the second heating from a non-isothermal experiment at 10°C/min from -85°C to 200°C.

A second aspect of the present invention refers to a process for the preparation of the composition of the invention, said process comprises the mixture of the poly(alkylene carbonate), referred to as component a), and the poly(alkylene carbonate), referred to as component b).

The components of the composition of the invention can be mixed following ordinary processes in the art such as those described in Encyclopedia of Polymer Science and Engineering, 2nd Ed., vol. 14, Polymer Blends chapter, page 9. Procedures well known to the skilled person include combining solutions of the mixed components, by roller mixing or by compounding in an extruder or kneader and the like.

In one embodiment, the poly(alkylene carbonates) are mixed in an internal mixer or chamber, such as a Haake chamber, at temperatures sufficient to molten the polymers, for example ranging from 20°C to 250°C, typically between 100°C and 200°C, during the time necessary to obtain a homogeneous mixture.

In another embodiment of the invention, the components of the composition of the invention are mixed in a suitable solvent. Any solvent that can dissolve all the components is appropriate, and those which are volatile are preferred (e.g. THF, dichloromethane, ethyl acetate or acetone). After mixing is complete, the solvent could be optionally removed to provide the mixture.

Each of the poly(alkylene carbonates) is added to the mixture in a weight proportion ranging from 5 to 95 wt%.

In a preferred embodiment, the poly(alkylene carbonate), referred to as component a), is selected from poly(propylene carbonate), poly(ethylene carbonate), poly(propylene and ethylene carbonate) and mixtures thereof. More preferably, said poly(alkylene carbonate) is poly(propylene carbonate) or poly(ethylene carbonate).

In a particular embodiment, when the poly(alkylene carbonate), referred to as component a), is poly(propylene carbonate) it is added to the mixture in a weight proportion between 5% and 95%, more preferably from 10 to 90 wt%, with respect to the total weight of the mixture.

In another particular embodiment, when the poly(alkylene carbonate), referred to as component a), is poly(ethylene carbonate) it is added to the mixture in a weight proportion between 5% and 90%, more preferably from 5 to 50 wt%, even more preferably from 5 to 25 wt%, with respect to the total weight of the mixture.

In another preferred embodiment, the poly(alkylene carbonate), referred to as component b), is selected from poly(propylene carbonate), poly(cyclohexene carbonate), poly(limonene carbonate), poly(propylene and cyclohexene carbonate), poly(propylene and limonene carbonate) and mixtures thereof. More preferably, said poly(alkylene carbonate) is poly(propylene carbonate).

In a particular embodiment, when the poly(alkylene carbonate), referred to as component b), is poly(propylene carbonate) it is added to the mixture in a weight proportion between 5% and 95%, more preferably from 10 to 90 wt%, with respect to the total weight of the mixture.

In another particular embodiment, the poly(propylene carbonate), referred to as component b), is added to the mixture in a weight proportion between 10% and 95%, more preferably from 50 to 95 wt%, even more preferably from 75 to 95 wt%, with respect to the total weight of the mixture.

The resulting mixture of both components exhibits a synergistically improved thermal stability when compared to the isolated components. Furthermore, the combination of said components provides improved adhesion properties, particularly shear adhesion, as well as peeling from canvas, when it is also compared to the properties of each component alone. All these features make the composition of the invention very suitable for the preparation of adhesive formulations, such as pressure sensitive adhesives or hot melt adhesives, and particularly controlled open-time adhesives.

Thus, a further aspect of the present invention refers to an adhesive formulation comprising the composition as described above. Said adhesive formulation thus comprises a composition comprising:
a) 5-95 wt% of a poly(alkylene carbonate), wherein said poly(alkylene carbonate) has a glass transition temperature equal to or lower than 30°C and a number average molecular weight higher than 15,000 Da; and
b) 95-5 wt% of a poly(alkylene carbonate), wherein said poly(alkylene carbonate) has a glass transition temperature higher than 30°C.

The adhesive formulation of the invention is solid at room temperature, however at higher temperatures it becomes a sticky viscous liquid which may be readily extruded or applied onto a substrate surface, to wet-out on the said surface and penetrate somewhat into porous surfaces, providing a good basis for adhesion to the substrate. Thus, the adhesive formulation of the present invention should be applied onto a substrate at a temperature that allows it to be a sticky viscous liquid, for example at a temperature ranging from 150 to 180°C. The adhesive can be applied by brush or extrusion nozzle to provide a deposited layer on a substrate surface which converts to a cohesive tacky layer strongly adherent to the substrate.

In a particular embodiment, the adhesive formulation is a pressure sensitive adhesive or a hot melt adhesive. More particularly, the adhesive formulation is a controlled open-time adhesive formulation. By the term open time it is understood the time required after the adhesive has been applied onto a first substrate for said adhesive to be still capable of creating an effective bond to a second substrate. Thus, a controlled open-time adhesive formulation refers to an adhesive formulation that, when applied on a substrate surface in the form of a layer, is converted into a tacky layer adherent to the substrate over a controlled period of time, depending on the final application.

It has been observed that the higher the proportion of poly(alkylene carbonate) having a Tg lower than 30°C, the shorter the adhesion time. Thus, it is possible to control the open time of the adhesive by simply varying the proportion of the components in the mixture.

Although a suitable adhesive can be obtained with the composition of the invention having improved thermal and adhesion properties, the adhesive formulation can also include other components and/or additives to increase the levels of adhesion and/or processing and service properties, e.g. viscosity or flexibility.

In a particular embodiment, the adhesive formulation of the present invention further comprises a tackifying resin.

A tackifying resin can be optionally incorporated to the adhesive formulation of the invention in weight proportions ranging from 0 to 30 wt%, more preferably up to 15 wt%, even more preferably up to 10% by weight based on the total weight of the formulation.

The term tackifying resin is well recognized in the art and includes those substances that provide tack to an adhesive formulation.

Resins compatible with the other components of the adhesive formulation are preferred. Examples of suitable resins include rosin resins, hydrocarbon resins, terpene resins and derivatives thereof.

In a particular embodiment, the tackifying resin is selected from rosin resins (also known as colophony resins), rosin ester resins, fully or partly hydrogenated rosin resins, fully or partly hydrogenated rosin ester resins, disproportionated rosin resins, disproportionated rosin ester resins; aromatic, aliphatic or cycloaliphatic hydrocarbon resins or derivatives thereof; fully or partly hydrogenated aromatic, aliphatic or cycloaliphatic hydrocarbon resins; terpene resins, terpene polymers and copolymers, terpene phenolic resins and hydrogenated derivatives thereof.

In a preferred embodiment, the tackifying resin is a rosin resin or a derivative thereof. Preferably, it is selected from rosin resin, fully or partly hydrogenated rosin resin, disproportionated rosin resin, rosin ester resin, fully or partly hydrogenated rosin ester resin and disproportionated rosin ester resin. Even more preferably the tackifying resin is a hydrogenated rosin ester resin, such as glycerol ester of hydrogenated rosin resin.

In another preferred embodiment, the tackifying resin is a mixture of a rosin resin or a derivative thereof and a hydrocarbon resin or a derivative thereof, as defined above.

In another particular embodiment, the adhesive formulation of the invention further comprises 0.1 to 10 wt% of at least one plasticizer, based on the total weight of the adhesive formulation. Preferably, it comprises from 0.5 to 7 wt%, more preferably from 1 to 5 wt% of at least one plasticizer.

Such plasticizers should be free of water and compatible with the components of the adhesive formulation. In a particular embodiment, the at least one plasticizer is selected from medicinal white oils, mineral oils, vegetal or animal oils, alkyl esters of aliphatic or aromatic carboxylic acids, such as adipates, sebacates, phthalates, citrates, benzoates, mellitates and aromatic sulphonates, alcohols, glycols or polyols, including polyether polyols and polyester polyols, and mixtures thereof.

The plasticizer is added to the formulation in a sufficient amount to provide the desired rheological properties, particularly viscosity or flexibility, and to disperse any catalyst that may be present in the system.

In addition to the components mentioned above, customary auxiliaries and/or additives can also be added to the adhesive formulation.

In a particular embodiment, the adhesive formulation comprises 0 to 5 wt% of one or more further additives, based on the total weight of the adhesive formulation. More particularly, it comprises from 0.01 to 5 wt% of one or more further additives, preferably from 0.01 to 3 wt%, more preferably from 0.05 to 2 wt%, even more preferably from 0.05 to 0.5 wt%.

Such additives may include, but are not limited to, antioxidants, lubricants, stabilizers, colorants, flame retardants, inorganic and/or organic fillers and reinforcing agents.

In a particular embodiment, the adhesive formulation of the invention comprises 0 to 5 wt. % of at least one antioxidant, based on the total weight of the adhesive composition. More particularly, it comprises from 0.01 to 5 wt % of at least one antioxidant, preferably from 0.01 to 3 wt %, more preferably from 0.05 to 2 wt %, even more preferably from 0.05 to 0.5 wt %.

In an embodiment, the at least one antioxidant is selected from sterically hindered phenols, phosphites and mixtures thereof. Preferably, it is a mixture of a sterically hindered phenol and a phosphite.

Sterically hindered phenols are well known in the art and refer to phenolic compounds which contain sterically bulky radicals, such as tert-butyl, in close proximity to the phenolic hydroxyl group thereof. In particular, they may be characterized by phenolic compounds substituted with tert-butyl groups in at least one of the ortho positions relative to the phenolic hydroxyl group. In a particular embodiment, the sterically hindered phenol has tert-butyl groups in both ortho-positions with respect to the hydroxyl group. Representative hindered phenols include pentaerythritol tetrakis(3-(3,5-di-tert-butyl-4-hydroxyphenyl)propionate), 1,3,5-trimethyl-2,4,6- tris(3,5-di-tert-butyl-4-hydroxybenzyl) benzene, n-octadecyl-3(3,5-di-tert-butyl-4-hydroxyphenyl) propionate, 4,4'-rnethylenebis(4-rnethyl-6-tert-butylphenol), 4,4'-thiobis(6-tert-butyl-o-cresol), 6-(4-hydroxyphenoxy)-2,4-bis(n-ocytlthio)-1,3,5-triazine, 2,4, 6- tris(4-hydroxy-3,5-di-tert-butyl-phenoxy)-1,3,5-triazine, di-n-octadecyl-3,5-di-tert-butyl-4-hydroxybenzylphosphonate, 2-(n-octylthio)ethyl-3,5-di-tert-butyl-4-hydroxybenzoate, and sorbitol hexa-(3,3,5-di-tert-butyl-4-hydroxy-phenyl) propionate.

In a particular embodiment, phosphites are aromatically substituted phosphites, preferably substituted or unsubstituted triphenyl phosphites. Examples of these phosphites include triphenyl phosphite, trisnonylphenyl phosphite, and tris(2,4-di-tert-butylphenyl)-phosphite.

In a particular embodiment, the adhesive formulation of the invention comprises from 0.05 to 0.5 wt % of at least one antioxidant selected from sterically hindered phenols, aromatically substituted phosphites and mixtures thereof. In an embodiment, the antioxidant is a mixture of a sterically hindered phenol and an aromatically substituted phosphite, e.g. a mixture of pentaerythritol tetrakis(3-(3,5-di-tert-butyl-4-hydroxyphenyl)propionate) and tris(2,4-di-tert-butylphenyl)-phosphite.

As lubricants, non-reactive liquids can be used to soften the pressure sensitive adhesive or to reduce its viscosity for improved processing.

Viscosity modifiers can also be used, such as benzoates, phthalates or paraffin oils.

Stabilizers may include oxidation stabilizers, hydrolysis stabilizers and/or UV stabilizers. Examples of hydrolysis stabilizers include oligomeric and/or polymeric aliphatic or aromatic carbodiimides. As UV stabilizers, hydroxybenzotriazoles, zinc dibutyl thiocarbamate, 2,6-ditertiary butylcatechol, hydroxybenzophenones, hindered amines and phosphites can be used to improve the light stability of the adhesive formulation. Color pigments have also been used for this purpose.

The adhesive formulation of the invention may further comprise one or more suitable colorants. Typical inorganic coloring agents include, but are not limited to, titanium dioxide, iron oxides and chromium oxides. Organic pigments may include azo/diazo dyes, phthalocyanines and dioxazines as well as carbon black.

The adhesive formulation of the invention may further comprise one or more suitable flame retardants to reduce flammability. The choice of flame retardant often depends on the intended service application of the formulation and the attendant flammability testing scenario governing that application. Examples of such flame retardants include chlorinated phosphate esters, chlorinated paraffins and melamine powders.

Optional additives of the adhesive formulation of the invention include fillers. Such fillers are well known to those skilled in the art and include, but are not limited to, carbon black, titanium dioxide, calcium carbonate, surface treated silicas, titanium oxide, fume silica, talc, aluminium trihydrate and the like. In certain embodiment, a reinforcing filler is used in sufficient amount to increase the strength of the composition and/or to provide thixotropic properties to the composition.

Other optional additive to be used in the adhesive formulation of the invention includes clays. Suitable clays include, but are not limited to, kaolin, surface treated kaolin, calcined kaolin, aluminum silicates and surface treated anhydrous aluminum silicates. The clays can be used in any form. Preferably, the clay is in the form of pulverized powder, spray-dried beads or finely ground particles.

The adhesive formulation of the present invention may further include waxes as optional additive. Useful waxes include e.g. paraffin waxes, microcrystalline and macrocrystalline waxes, Fischer-Tropsch waxes, oxidized Fischer-Tropsch waxes, polyethylene and by-products of polyethylene wherein Mw is less than 3,000, propylene waxes, and functionalized waxes such as hydroxy stearamide and fatty amide waxes. Also suitable are ultra-low molecular weight ethylene/alpha-olefin interpolymers prepared using a constrained geometry (e.g. metallocene) catalyst, which may be referred to as homogeneous waxes. The amount of wax to be added is calculated so that the viscosity is lowered to a desired range without adversely affected the adhesive properties of the formulation.

The adhesive formulation of the invention can be applied as a thin coating to a variety of substrates. After application of the adhesive formulation to provide a layer on a substrate surface of adequate thickness, preferably from 0.05 to 0.3 mm, it forms a soft, elastic mass having good contact adhesion characteristics. Furthermore, once applied on the substrate surface, the adhesion is not immediate but it can be controlled over time in order to allow the correct adhesion of the substrates. This is particularly advantageous when, for example, large structures or those having surface irregularities along the mating surfaces have to be bonded.

In a particular embodiment, the adhesive formulation is a pressure sensitive adhesive. Said adhesive exhibits a tackiness that remains at a high level for periods higher than three months and good quality bonds may be made during this period by simple application of light pressure to a substrate placed against the layer without application of other inducements, such as heat.

In a more particular embodiment of the invention, the pressure sensitive adhesive is a hot melt pressure sensitive adhesive. More particularly, the bonds are formed by bringing the adhesive in contact with the substrate and by applying pressure and temperature, so as the adhesive wets out the substrate on contact and, subsequently, it forms a hard material that remains permanently tacky on the substrate.

The adhesive formulation of the present invention can be prepared by conventional methods, for example, by mixing the components of the adhesive formulation. Said components can be mixed in a mixer or chamber, such as a Haake chamber, at temperatures sufficient to melt the polymers, for example ranging from 20°C to 250°C, typically between 100°C and 200°C, during the time necessary to obtain a homogeneous mixture. The different additives, if any, can be added before or after mixing the poly(alkylene carbonates)or the components a) and b) of the composition of the present invention.

This process can be carried out in an extruder.

The adhesive formulation can also be obtained in the form of a film by means of a mixture of all components in solution, for example by solution casting from a solvent, such as THF, dichloromethane, ethyl acetate or acetone.

Another aspect of the present invention relates to the use of the adhesive formulation to bond substrates. These substrates may be flexible or, alternatively, rigid. In a particular embodiment, one of the substrates to be bonded is thin and flexible, preferably in the form of films, multi-layer films, paper, aluminium, or multi-layer constructions from paper, aluminium and polymer films.

The adhesive formulation according to the invention can be used to bond substrates such as glass, metal, ceramic, wood, coated or uncoated paper, paperboard packaging and plastics, such as polyethylene terephthalate (PET), polyethylene naphthalate (PEN), polyamide (PA), polyethylene (PE), polypropylene (PP), polyvinyl chloride (PVC), polystyrene (PS) and cellophane. Thin flexible substrates such as films, multi-layer films or paper can then be glued to such solid substrates.

The following examples merely illustrate the invention. Those skilled in the art will recognize many variations that can be performed without altering the functioning of the invention.

### Examples

### Measurement and determination of Tg

Glass transition temperature (Tg) was taken from the second heating in differential scanning calorimeter (DSC) experiments according to the following procedure. Non-isothermal (10°C/min from -85 to 200°C) experiments were carried out using a DSC TA Instruments Q2000 under nitrogen flow, operating with an intra-cooler under nitrogen flow. Temperature and heat flow calibrations were performed with indium as standard.

### Measurement of Number Average Molecular Weight (Mn)

The values of the number-average molecular weight (Mn) of the polyalkylene carbonates used in the preparation of the polymer compositions were determined against polystyrene standards by gel-permeation chromatography (GPC) using a Bruker 3800 equipped with a deflection RI detector. Tetrahydrofuran at 1 mL/min flow rate was used as eluent at room temperature.

### Example 1. Preparation of pressure sensitive adhesives

Different polymer compositions containing a mixture of poly(alkylene carbonates) (PACs) were prepared according to the procedure detailed below.

Poly(propylene carbonates) (PPC) having Tg higher than 30°C were used as component b) to prepare the different samples. Said PPCs have the following properties:

**Table 1**

| PAC(b) | Mn (Da) | PDI | carbonate linkages (%) | Tg (°C) | TGA (°C) |
|---|---|---|---|---|---|
| PPC1 | 80,000 | 1.6 | >90 | 36 | 231 |
| PPC5 | 236,000 | 1.2 | >90 | 32 | 229 |

Poly(alkylene carbonates), either poly(propylene carbonate) (PPC) or poly(ethylene carbonate) (PEC), having Tg lower than 30°C were used as component a) to prepare the different samples. They have the following properties:

**Table 2**

| PAC(a) | Mn (Da) | PDI | carbonate linkages (%) | Tg (°C) | TGA (°C) |
|---|---|---|---|---|---|
| PPC2 | 24,000 | 5.0 | >75 | 19 | 248 |
| PPC3 | 23,000 | 1.4 | >90 | 24 | 260 |
| PPC4 | 129,000 | 1.9 | >90 | 27 | 228 |
| PPC6 | 64,000 | 2.6 | >75 | 22 | 244 |
| PEC1 | 73,000 | 3.3 | >90 | 18 | 214 |

PEC1 and PPC2 were supplied by Empower Materials as QPAC25 and QPAC40; PPC6 was supplied by TaiZhou BangFeng Plastic Co.,Ltd, whereas PPC1, PPC3, PPC4 and PPC5 were experimental materials prepared according to the procedures described in Angew. Chem. Int., 2003, 42, 5484-5487; Angew. Chem. Int., 2004, 43, 6618-6639; Macromolecules, 2010, 43, 7398-7401.

The polymer compositions were prepared by mixing the poly(alkylene carbonates) in the quantities listed in Table 3 below:
Each PAC was used in the proportions indicated in each case. They were mixed in a Haake internal mixer at a time and temperature sufficient to obtain a homogeneous mixture, typically at 170°C and 50 rpm for 8 minutes. The samples from the mixer were compression molded at 170°C and 100 bar for 3 min using a Collin polymer press to form squared plates for further characterizations.

**Table 3**

| Sample | PAC(b) Tg > 30°C | PAC(b) weight percentage in the mixture (%) | PAC(a) Tg < 30°C | PAC(a) weight percentage in the mixture (%) |
|---|---|---|---|---|
| Sample 1 | PPC1 | 50 | PPC3 | 50 |
| Sample 2 | | 25 | | 75 |
| Sample 3 | | 75 | | 25 |
| Sample 4 | | 75 | PPC2 | 25 |
| Sample 5 | | 50 | | 50 |
| Sample 6 | | 25 | | 75 |
| Sample 7 | | 10 | | 90 |
| Sample 8 | | 90 | | 10 |
| Sample 9 | | 90 | PEC1 | 10 |
| Sample 10 | | 80 | | 20 |
| Sample 11 | | 50 | PPC4 | 50 |
| Sample 12 | | 90 | PPC6 | 10 |

For comparative purposes, polymer compositions not covered by the present invention were also prepared from the PAC(a)s and PAC(b)s listed in Table 1 and 2 above. These comparative polymer compositions were prepared by mixing the poly(alkylene carbonates) in the quantities listed in Table 4 below and following the same procedure as described above for the polymer compositions of the invention:

**Table 4**

| Sample | PAC | PAC weight percentage in the mixture (%) | PAC | PAC weight percentage in the mixture (%) |
|---|---|---|---|---|
| Comparative Sample 1 | PPC1 (Tg>30°C) | 50 | PPC5 (Tg>30°C) | 50 |
| Comparative Sample 2 | PPC2 (Tg<30°C) | 90 | PEC1 (Tg<30°C) | 10 |
| Comparative Sample 3 | | 80 | | 20 |

### Example 2. Measurement of thermal stability and adhesive properties Thermo gravimetry

A Mettler TGA instrument was used for the thermogravimetric measurements. Non-isothermal experiments were performed in the temperature range 30-700 °C, at heating rate of 5 °C/min in nitrogen atmosphere. TGA value is taken from the first maximum of the derivative thermogravimetric curves (DTG).

Table 5 shows the experimental data of the thermal properties of the different tested samples.

**Table 5**

| **Samples** | **TGA (°C)** |
|---|---|
| PPC1 | 231.1 |
| Sample 1 | **291.9** |
| Sample 2 | **287.0** |
| Sample 3 | **290.1** |
| PPC3 | 260.0 |
| | |
| PPC1 | 231.1 |
| Sample 4 | **291.5** |
| Sample 5 | **292.5** |
| Sample 6 | **292.7** |
| Sample 7 | **293.2** |
| Sample 8 | **282.0** |
| PPC2 | 248.0 |
| | |
| PPC1 | 231.1 |
| Sample 9 | **245.6** |
| Sample 10 | **244.7** |
| PEC1 | 214.1 |
| | |
| PPC1 | 231.1 |
| Sample 11 | **288.0** |
| PPC4 | 228.0 |
| | |
| PPC1 | 231.1 |
| Sample 12 | **263.2** |
| PPC6 | 244.0 |
| | |
| PPC1 | 231.1 |
| Comparative sample 1 | 228.2 |
| PPC5 | 229.0 |
| | |
| PPC2 | 248.0 |
| Comparative sample 2 | 240.0 |
| Comparative sample 3 | 240.0 |
| PEC1 | 214.1 |

As derivable from these results, the mixture of poly(alkylene carbonates) having different glass transition temperatures improves synergistically the thermal stability of each isolated component since the degradation temperature resulting from said mixture is significantly higher. This effect is not observed in the case of compositions having poly(alkylene carbonates) having both glass transition temperatures higher or lower than 30°C.

### Peeling from canvas tests

The adhesive properties under T-peeling strain were tested in canvas-hot melt-canvas adhesive bonds. Canvas is a porous material with a texture similar to cardboard and edge-books which are commonly bonded with hot melt adhesives.

For the adhesive bonds with canvas, 30x150 mm probes were used, without any surface treatment, using the non-painted side of the canvas.

The adhesive formulation was applied at 180°C with a spreader (the temperature was controlled by means of a Brookfiled Thermosel device) on the surface of one of the two probes to be bonded. Subsequently, the probes were bonded by applying a pressure of 0.88 MPa for 10 seconds. The pressure was applied by means of a hydraulic press.

The T-peeling tests were performed 1 hour after having conducted the adhesive bonds using a universal testing machine Instron 4411 (Instron España and Portugal, Cerdanyola, Barcelona, Spain) at a peeling rate of 10 mm/min. The type of failure of the separated surfaces was determined visually.

### Shear adhesion tests

To assess the adhesive properties of the adhesive formulations, shear adhesion tests were performed. For doing that, aluminium-hot melt-aluminium adhesive bonds were prepared. Prior to performing the adhesive bonds, the surfaces of the metal to be bonded were treated by a mechanical friction treatment consisting of scratching the surface with a scourer (Scotch Brite®) to improve the roughness of said surface, followed by cleaning it with isopropanol to remove surface contaminants, and leaving the solvent to evaporate for at least 30 minutes.

Once the surface treatment were performed, an adhesive droplet was applied at 180°C on one of the aluminium probes to be bonded and, subsequently, the other aluminium probe was placed above, applying a 2 kg weight over the bond (equivalent to a pressure of 65.3 KPa) for 10 seconds. The temperature at which the adhesive is applied was controlled by means of a Brookfield Thermosel device. The bonds were left to cool for 1 hour at room temperature.

Then, the shear adhesion tests were performed using a universal testing machine Instron 8516 (Instron, Buckinghamshire, England) at a clamp displacement rate of 10 mm/min.

The results given in table 6 correspond to an average from 5 trials and the type of failure of the separated surfaces was determined visually.

**Table 6 below shows the experimental data of the adhesive properties of the different samples:**

| Sample | Open time (100% adhesion) (s) | Peeling from canvas (N/m) | Shear adhesion (KPa) |
|---|---|---|---|
| PPC1 | 10 | 143 | 725 |
| Sample 1 | <1 | **540** | **800** |
| Sample 2 | <1 | **586** | **1,040** |
| PPC3 | <1 | 309 | 590 |
| PPC1 | 10 | 143 | 725 |
| Sample 4 | 5 | **444** | **1,100** |
| Sample 5 | 5 | **515** | **800** |
| Sample 6 | <1 | **426** | **1,700** |
| Sample 7 | <1 | **519** | **900** |
| PPC2 | <1 | 370 | 638 |
| | | | |
| PPC1 | 10 | 143 | 725 |
| Sample 9 | 5 | 394 | 2000 |
| Sample 10 | 5 | 228 | 2000 |
| PEC1 | 5 | 217 | 2,200 |
| | | | |
| PPC1 | 10 | 143 | 725 |
| Comparative sample 1 | 30 | 288 | 2100 |
| PPC5 | 5 | 439 | 2200 |

As can be observed from the experimental results, the composition according to the present invention provides an adhesive formulation with significantly improved adhesion properties, particularly an improved shear adhesion and peeling from canvas, when compared to the isolated components.

Furthermore, depending on the final application, the most appropriate adhesive formulation can be selected in view of time required to bond the substrates since, according to the data obtained, the open time differs from one formulation to another.

Actually, it has been observed that the higher the proportion of poly(alkylene carbonate) having a Tg lower than 30°C, the shorter the adhesion time. Thus, it is possible to control the open time of the adhesive by simply varying the proportion of the components in the mixture.

## Claims

1. A composition comprising:
a) 5-95 wt% of a poly(alkylene carbonate), wherein said poly(alkylene carbonate) has a glass transition temperature equal to or lower than 30°C and a number average molecular weight higher than 15,000 Da; and
b) 95-5 wt% of a poly(alkylene carbonate), wherein said poly(alkylene
carbonate) has a glass transition temperature higher than 30°C;
wherein:
- the values of the glass transition temperature and the number average molecular weight are measured following the methods specified in the description.

2. The composition according to claim 1, wherein the poly(alkylene carbonate), referred to as component a), is selected from poly(propylene carbonate), poly(ethylene carbonate), poly(propylene and ethylene carbonate) and mixtures thereof.

3. The composition according to any of claims 1 to 2, wherein the poly(alkylene carbonate), referred to as component a), has a Tg between 10 and 30°C.

4. The composition according to any of claims 1 to 3, wherein the poly(alkylene carbonate), referred to as component b), is poly(propylene carbonate).

5. The composition according to claim 4, wherein the poly(propylene carbonate) has a Tg between 31 and 50°C.

6. The composition according to any of claims 1 to 5 which comprises:
a) 10-90 wt% of poly(propylene carbonate), wherein said poly(propylene carbonate) has a glass transition temperature equal to or lower than 30°C and a number average molecular weight higher than 15,000 Da; and
b) 90-10 wt% of poly(propylene carbonate), wherein said poly(propylene carbonate) has a glass transition temperature higher than 30°C.

7. The composition according to claim 6, wherein the poly(propylene carbonate), referred to as component a), has a number average molecular weight from 20,000 to 300,000 Da.

8. The composition according to any of claims 1 to 5 which comprises:
a) 5-25 wt% of poly(ethylene carbonate), wherein said poly(ethylene carbonate) has a glass transition temperature equal to or lower than 30°C and a number average molecular weight higher than 15,000 Da; and
b) 95-75 wt% of poly(propylene carbonate), wherein said poly(propylene carbonate) has a glass transition temperature higher than 30°C.

9. The composition according to claim 8, wherein the poly(ethylene carbonate) has a number average molecular weight from 50,000 to 300,000 Da.

10. The composition according to any one of claims 1 to 9, wherein the poly(alkylene carbonate), referred to as component a) and component b), is the resulting product of copolymerizing CO₂ with alkylene oxide in the presence of a catalyst.

11. The composition according to any one of claims 1 to 10, wherein the poly(alkylene carbonate), referred to as component b), has on average more than 75% of adjacent monomer units connected via carbonate linkages.

12. A process for the preparation of a composition as defined in any one of claims 1 to 11, said process comprises the mixture of the poly(alkylene carbonates), referred to as component a) and component b), until a homogenous mixture is obtained.

13. An adhesive formulation comprising the composition as defined in any one of claims 1 to 11.

14. The adhesive formulation according to claim 13 which is a pressure sensitive adhesive or a hot melt adhesive.

15. The adhesive formulation according to claim 14, wherein the hot melt adhesive is a controlled open-time adhesive.

## Patentansprüche

1. Eine Zusammensetzung umfassend:
a) 5-95 Gew-% eines Poly(alkylencarbonats), wobei das besagte Poly(alkylencarbonat) eine Glasübergangstemperatur gleich oder niedriger als 30°C und ein zahlenmittleres Molekulargewicht von mehr als 15000 Da hat; und
b) 95-5Gew.-% eines Poly(alkylencarbonat)s, wobei besagtes Poly(alkylencarbonat) eine Glasübergangstemperatur von mehr als 30°C hat;
wobei:
- die Werte der Glasübergangstemperatur und des zahlenmittleren Molekulargewichts gemäß den Methoden gemessen werden, die in der Beschreibung spezifiziert sind.

2. Die Zusammensetzung gemäß Anspruch 1, wobei das Poly(alkylencarbonat), bezeichnet als Komponente a), ausgewählt ist aus Poly(propylencarbonat), Poly(ethylencarbonat), Poly(propylen- und ethylencarbonat) und Mischungen davon.

3. Die Zusammensetzung gemäß einem der Ansprüche 1 bis 2, wobei das Poly(alkylencarbonat), bezeichnet als Komponente a), ein Tg zwischen 10 und 30°C hat.

4. Die Zusammensetzung gemäß einem der Ansprüche 1 bis 3, wobei das Poly(alkylencarbonat), bezeichnet als Komponente b), Poly(propylencarbonat) ist.

5. Die Zusammensetzung gemäß Anspruch 4, wobei das Poly(propylencarbonat) ein Tg zwischen 31 und 50°C hat.

6. Die Zusammensetzung gemäß einem der Ansprüche 1 bis 5 umfassend:
a) 10-90 Gew.-% Poly(propylencarbonat), wobei besagtes Poly(propylencarbonat) eine Glasübergangstemperatur gleich oder niedriger als 30°C und ein zahlenmittleres Molekulargewicht von mehr als 15000 Da hat; und
b) 90-10 Gew. -% Poly(propylencarbonat), wobei besagtes Poly(propylencarbonat), eine Glasübergangstemperatur von mehr als 30 °C hat.

7. Die Zusammensetzung gemäß Anspruch 6, wobei das Poly(propylencarbonat), bezeichnet als Komponente a), ein zahlenmittleres Molekulargewicht von 20000 bis 300000 Da hat.

8. Die Zusammensetzung gemäß einem der Ansprüche 1 bis 5, umfassend:
a) 5-25Gew.-% Poly(ethylencarbonat), wobei besagtes Poly(ethylencarbonat) eine Glasübergangstemperatur gleich oder niedriger als 30°C und ein zahlenmittleres Molekulargewicht von mehr als 15000 Da hat; und
b) 95-75% Gew.-% Poly(propylencarbonat), wobei besagtes Poly(propylencarbonat) eine Glasübergangstemperatur von mehr 30°C hat.

9. Die Zusammensetzung gemäß Anspruch 8, wobei das Poly(ethylencarbonat) ein zahlenmittleres Molekulargewicht von 50000 bis 300000 Da hat.

10. Die Zusammensetzung gemäß einem der Ansprüche 1 bis 9, wobei das Poly(alkylencarbonat), bezeichnet als Komponente a) und Komponente b), das resultierende Produkt aus einer Copolymerisation von CO₂ mit einem Alkylenoxid in der Gegenwart eines Katalysators ist.

11. Die Zusammensetzung gemäß einem der Ansprüche 1 bis 10, wobei das Poly(alkylencarbonat), bezeichnet als Komponente b), im Durchschnitt mehr als 75% von benachbarten Monomereinheiten hat, die durch Carbonatbindungen verbunden sind.

12. Ein Verfahren zur Herstellung einer Zusammensetzung wie in einem der Ansprüche 1 bis 11 definiert, das besagte Verfahren umfasst die Mischung von Poly(alkylencarbonaten), bezeichnet als Komponente a) und Komponente b), bis eine homogene Mischung erhalten wird.

13. Eine Klebstoffformulierung, umfassend die Zusammensetzung wie in einem der Ansprüche 1 bis 11 definiert.

14. Die Klebstoffformulierung, gemäß Anspruch 13, welches ein druckempfindlicher Klebstoff oder ein Heißschmelzklebstoff ist.

15. Die Klebstoffformulierung gemäß Anspruch 14, wobei der Heißschmelzklebstoff ein kontrollierter Offenzeit Klebstoff ist.

## Revendications

1. Une composition comprenant :
a) de 5 à 95% en poids d'un poly(carbonate d'alkylène), ledit poly(carbonate d'alkylène) ayant une température de transition vitreuse égale ou inférieure à 30°C et un poids moléculaire moyen en nombre supérieur à 15000 Da ; et
b) de 95 à 5 % en poids d'un poly(carbonate d'alkylène), ledit poly(carbonate d'alkylène) ayant une température de transition vitreuse supérieure à 30°C ;
dans laquelle :
- les valeurs de la température de transition vitreuse et de la masse moléculaire moyenne en nombre sont mesurées selon les méthodes spécifiées dans la description.

2. La composition selon la revendication 1, dans laquelle le poly(carbonate d'alkylène), dénommé composant a), est choisi parmi le poly(carbonate de propylène), le poly(carbonate d'éthylène), le poly(carbonate de propylène et d'éthylène) et les mélanges de ceux-ci.

3. La composition selon l'une quelconque des revendications 1 à 2, dans laquelle le poly(carbonate d'alkylène), dénommé composant a), a une Tg comprise entre 10 et 30°C.

4. La composition selon l'une quelconque des revendications 1 à 3, dans laquelle le poly(carbonate d'alkylène), dénommé composant b), est un poly(carbonate de propylène).

5. La composition selon la revendication 4, dans laquelle le poly(carbonate de propylène) a une Tg comprise entre 31 et 50°C.

6. La composition selon l'une quelconque des revendications 1 à 5 qui comprend :
a) de 10 à 90 % en poids de poly(carbonate de propylène), ledit poly(carbonate de propylène) ayant une température de transition vitreuse égale ou inférieure à 30°C et une masse moléculaire moyenne en nombre supérieure à 15000 Da ; et
b) de 90 à 10 % en poids de poly(carbonate de propylène), ledit poly(carbonate de propylène) ayant une température de transition vitreuse supérieure à 30°C.

7. La composition selon la revendication 6, dans laquelle le poly(carbonate de propylène), dénommé composant a), a un poids moléculaire moyen en nombre allant de 20000 à 300000 Da.

8. La composition selon l'une quelconque des revendications 1 à 5 qui comprend :
a) de 5 à 25 % en poids de poly(carbonate d'éthylène), ledit poly(carbonate d'éthylène) ayant une température de transition vitreuse égale ou inférieure à 30°C et une masse moléculaire moyenne en nombre supérieure à 15000 Da ; et
b) de 95 à 75 % en poids de poly(carbonate de propylène), ledit poly(carbonate de propylène) ayant une température de transition vitreuse supérieure à 30°C.

9. La composition selon la revendication 8, dans laquelle le poly(carbonate d'éthylène) a un poids moléculaire moyen en nombre allant de 50000 à 300000 Da.

10. La composition selon l'une quelconque des revendications 1 à 9, dans laquelle le poly(carbonate d'alkylène), dénommé composant a) et composant b), est le produit résultant de la copolymérisation de CO₂ avec de l'oxyde d'alkylène en présence d'un catalyseur.

11. La composition selon l'une quelconque des revendications 1 à 10, dans laquelle le poly(carbonate d'alkylène), dénommé composant b), présente en moyenne plus de 75 % d'unités monomères adjacentes reliées par des liaisons carbonate.

12. Un procédé de préparation d'une composition telle que définie dans l'une quelconque des revendications 1 à 11, ledit procédé comprend le mélange des poly(carbonates d'alkylène), dénommés composant a) et composant b), jusqu'à ce qu'un mélange homogène soit obtenu.

13. Une formulation adhésive comprenant la composition telle que définie dans l'une quelconque des revendications 1 à 11.

14. La formulation adhésive selon la revendication 13 qui est un adhésif sensible à la pression ou un adhésif thermofusible.

15. La formulation adhésive selon la revendication 14, dans laquelle l'adhésif thermofusible est un adhésif à temps ouvert contrôlé.
